# EUROPEAN PATENT APPLICATION

(11) **EP 2 468 786 A1**
(43) Date of publication of application: **27.06.2012**
(21) Application number: 11189376.4
(22) Date of filing: 16.11.2011
(51) Int. Cl.: C08G 18/12, C08G 18/76, C08K 5/00, C09J 175/04, C08G 18/48, C08G 18/66, C08G 18/30

(54) **Adhesive compositions**

(30) Priority: 21.12.2010 US 425444 P; 24.06.2011 US 500920 P
(71) Applicant: Rohm and Haas Company, Philadelphia, PA 19106-2399 (US)
(72) Inventor: Shah, Pankaj Vinubhai, Crystal Lake, IL Illinois 60014 (US); Miyake, Kevin, Tower Lakes, IL Illinois 60010 (US)
(74) Representative: Buckley, Guy Julian

(57) **Abstract**

There is provided an adhesive composition comprising
(a) one or more polyisocyanate,
(b) one or more polyol, and
(c) one or more plasticizer,
wherein the amount of excess monomeric polyisocyanate is 5% or less by weight based on the weight of said composition.

Also provided is process for making a laminate, said process comprising applying a layer of that adhesive composition to a polymer film, contacting said layer with a second polymer film, and then curing said adhesive composition or allowing said adhesive composition to cure. Further provided is a laminate made by such a process.

## Description

The following is the background of the invention

A useful class of adhesive compositions are curable polyurethane adhesive compositions. A useful category of such compositions are solventless two-component compositions.

In such two-component compositions, one component is a polyisocyanate component and the other component is a component that contains one or more compounds with plural active hydrogens. When it is desired to use the two-component composition as an adhesive, the two components are mixed together, and the mixture is brought into contact with two or more substrates.

When the two components of the adhesive composition are first mixed together, it is desirable that the resulting mixture is a fluid with viscosity at 25°C low enough so that the fluid may easily be applied to a substrate. Usually, soon after a layer of the fluid has been applied to a substrate, a second substrate is brought into contact with that layer to form an assembly. It is desired that the adhesive composition undergoes a curing reaction after formation of the assembly and forms an adhesive bond between the substrates to form a bonded assembly. It is desirable that the adhesive composition shows good bond strength development. That is, it is desirable that, when a bonded assembly is first formed, the strength of the bond increases rapidly. It is desirable that the bond have good strength at 2 to 8 hours after formation of the bonded assembly. Good bond strength development is important to converters (i.e., those who manufacture bonded assemblies) because good bond strength development allows the converters to subject the bonded assembly to further manufacturing steps without the need to wait a long time for the adhesive composition to cure.

Some two-component adhesive compositions contain one or more monomeric aromatic polyisocyanate compound and one or more polyol. Such compositions are capable of undergoing chemical reactions that form urethane polymers, which are often useful curing reactions. The monomeric aromatic polyisocyanate may eventually react to form polymers and/or crosslinks that strengthen the adhesive bond.

These adhesive compositions are sometimes used to hold together two or more substrates to form a bonded assembly that is part or all of a container that contains food. Even though a curing reaction has taken place, some monomeric polyisocyanate compound may be present in the bonded assembly.

The presence of monomeric polyisocyanate provides certain benefits. The presence of monomeric polyisocyanate lowers the viscosity of the adhesive composition, thus making the composition easier to apply to substrate. Also, monomeric polyisocyanate is capable of participating in a curing reaction, thus increasing the molecular weight and/or crosslinking that the adhesive has after the curing process, which in turn is thought to improve the adhesive properties.

However, the presence of monomeric polyisocyanate compound is considered to be undesirable. One reason for the undesirability of monomeric polyisocyanate compounds is that they are considered to be both toxic and reactive. Another reason for the undesirability of monomeric polyisocyanate compounds is that they are capable of reacting with water to form amines, especially under acidic conditions. Such amines are considered to be undesirable. Among such amines, primary aromatic amines (PAAs) are considered especially undesirable. When a container contains food, it is desired that contact between the container and the food does not result in a situation in which appreciable amounts of any PAAs are present in the food.

The capacity of a bonded assembly to contribute to the presence of PAAs in food is generally tested by exposing the bonded assembly to dilute acetic acid for a time. The dilute acetic acid acts as a "simulant" (i.e., it simulates the action of food). During that time, PAAs that may be present in the bonded assembly may migrate into the simulant. Also during that time, any monomeric aromatic isocyanate compounds in the material under test may migrate into the simulant and react with the simulant to form PAA. Subsequently, the simulant may be analyzed for the total concentration of all PAAs. That concentration is herein called the "PAA level."

It is desirable that a bonded assembly has low PAA level.

In the past, it was common for a bonded assembly that was made using a two-component polyurethane adhesive to have an appreciable amount of monomeric aromatic polyisocyanate present, even after the formation of the bonded assembly and the curing reaction of the adhesive were considered complete. Such a bonded assembly had a high PAA level.

In the past, one approach to providing a bonded assembly with a low PAA level was to make a bonded assembly and then place that bonded assembly in storage prior to using the bonded assembly to make the package that will eventually contain food. The concentration of monomeric polyisocyanate will normally decline while the bonded assembly is in storage. It is thought that water in the atmosphere diffuses into the adhesive and reacts with isocyanate groups. While some of these reactions may result in formation of PAA, most of these reactions will result in formation of urea-type compounds or other relatively innocuous compounds. Therefore, as the isocyanate groups react, the amount of monomeric aromatic polyisocyanate decreases and the PAA level also decreases. In the past, storage times of 14 days or more have often been required before the PAA level becomes acceptably low.

Another approach is taken by US 2010/0010156, which describes an adhesive that leads to bonded multilayer films with reduced proportion of primary aromatic amines. US 2010/0010156 describes a polyurethane adhesive that contains at least one NCO-reactive polyurethane prepolymer and/or polyisocyanates, wherein the polyurethane adhesive contains a low molecular weight compound which contains at least one group reactive with primary amino groups selected from epoxide groups, (meth)acrylic groups or carboxylic anhydride groups.

It is desired to provide a curable polyurethane adhesive composition that has acceptable viscosity, that provides good adhesive properties, and that contains relatively low levels of monomeric polyisocyanate.

The present invention achieves these goals by using an approach different from that of US 2010/0010156. The present invention limits the amount of monomeric polyisocyanate in the adhesive composition. The present invention also includes one or more plasticizer. Plasticizers, in the past, were not included in adhesive compositions because it was thought that they would degrade the bond strength development of the adhesive composition. The present invention is not limited to any model or theory, but it is considered that, in the present invention, the plasticizer lowers the viscosity of the liquid curable adhesive composition without significantly adversely affecting the bond strength development of the adhesive composition.

The following is the statement of the invention.

In one aspect of the present invention, there is provided an adhesive composition comprising
i. one or more polyisocyanate,
ii. one or more polyol, and
iii. one or more plasticizer,
wherein the amount of excess monomeric polyisocyanate is 5% or less by weight based on the weight of said composition.

In a second aspect of the present invention, there is provided a process for making a laminate, said process comprising applying a layer of the adhesive composition of claim 1 to a polymer film, contacting said layer with a second polymer film, and then curing said adhesive composition or allowing said adhesive composition to cure.

In a third aspect of the present invention, there is provided a laminate formed by a process comprising applying a layer of the adhesive composition of the first aspect of the present invention to a polymer film, contacting said layer with a second polymer film, and then curing said adhesive composition or allowing said adhesive composition to cure.

The following is a detailed description of the invention.

A polyisocyanate is a compound that contains two or more isocyanate groups. Polyisocyanate compounds may be monomeric or non-monomeric. An aromatic polyisocyanate is a polyisocyanate that contains one or more aromatic ring. A polyisocyanate that contains no aromatic rings is a non-aromatic polyisocyanate.

A monomeric polyisocyanate is a compound that has two or more isocyanate groups, that has molecular weight of less than 1,000, and that has no urethane linkage and no urea linkage. Any polyisocyanate that is not a monomeric polyisocyanate is a non-monomeric polyisocyanate.

A compound with plural active hydrogens is an organic compound that has two or more active-hydrogen groups. An active-hydrogen group is a group that has a hydrogen that is connected to an oxygen or a nitrogen. A compound with two or more hydroxyl groups is a polyol. A polyol with exactly two hydroxyl compounds is a diol. A polyol with exactly three hydroxyl groups is a triol. A compound with two or more amine groups is a polyamine. Some compounds with plural active hydrogens have one or more amine group and one or more hydroxyl group.

A compound that contains two or more ether linkages in the same linear chain of atoms is known herein as a polyether. A compound that contains two or more ester linkages in the same linear chain of atoms is known herein as a polyester. A compound that is a polyester and a polyol is a polyester polyol, and a compound that is a polyether and a polyol is a polyether polyol.

An alkyl compound that has two or more hydroxyl groups attached to it is known herein as an alkyl polyol; an alkyl polyol has no substituent groups other than hydroxyl groups.

As used herein, a compound is "volatile" if it has a boiling point at one atmosphere pressure of 100°C or lower. As used herein, a "solvent" is a volatile compound that is liquid at one atmosphere pressure over a temperature range that includes 15°C to 20°C. A composition is considered herein to be "solventless" if that composition contains a total of all solvents in the amount of 5% or less by weight, based on the total weight of the composition. The "total solids" of a composition is considered herein to be the amount of compounds in the composition that are not volatile, by weight based on the total weight of the composition.

Some non-monomeric polyisocyanates are reaction products of one or more polyisocyanate with one or more compound with plural active hydrogen compounds, where such reaction products have two or more un-reacted isocyanate groups. Such non-monomeric polyisocyanates may be, for example, the reaction products of one or more polyisocyanate with one or more polyol or the reaction products of one or more polyisocyanate with one or more polyamine or a mixture thereof. A polyisocyanate that is a reaction product of one or more polyisocyanate with one or more compound with plural active hydrogen compounds and that has molecular weight of 1,000 or more is known herein as a prepolymer.

As used herein, a plasticizer is a compound that has no isocyanate group and that has no active-hydrogen group. To qualify as a plasticizer, a compound must also be soluble at 25°C in an adhesive composition of the present invention.

As used herein, a "polyurethane" is a compound that contains a linear chain of atoms that contains three or more linkages selected from urethane linkages and urea linkages.

It is sometimes useful to characterize a compound by the number of aliphatic carbon atoms it contains. As used herein, an aliphatic carbon atom is a carbon atom that belongs to one of the following types: (i) a carbon atom that has no bond to any atom other than other carbon atoms or hydrogen atoms; and (ii) a carbon atom that has a single bond to one heteroatom selected from oxygen, nitrogen, and sulfur, and that otherwise has no bond to any atom other than hydrogen atoms or carbon atoms of category (i).

A composition is said herein to "cure" as chemical reactions that desirably effect an increase in the molecular weight of the composition and/or effect crosslinking of the composition so as to improve the properties of the composition take place. Such chemical reactions are known as "curing reactions." The composition is said to be "cured" when such reactions are complete or when the curing reactions have progressed sufficiently far that the properties of the composition are useful and are not appreciably changing over time. A composition that is capable of undergoing one or more curing reaction is a curable composition.

As used herein, when a composition is said to have "little or no" amount of an ingredient, it is meant that the amount of that ingredient is either zero or is 0.1% by weight or less, based on the weight of the composition.

When it is said herein that a certain material is "not soluble" in the liquid portion of an adhesive composition, it is meant that there is no temperature in the range of 20°C to 50°C at which that material can be dissolved in the liquid portion of that adhesive composition in the amount of 1% or more by weight, based on the weight of the liquid portion of the adhesive composition.

A polymer film is a structure that is made of a polymer or mixture of polymers and that is 0.5 mm or less in one dimension and is 1 cm or more in both of the other two dimensions. The composition of a polymer film is 80% or more by weight one or more polymer, based on the weight of the film.

The adhesive composition of the present invention contains one or more polyisocyanates. Preferred compositions contain one or more monomeric polyisocyanate. The amount of monomeric polyisocyanate may usefully be characterized by quantity herein called "excess monomeric polyisocyanate," which is a calculated quantity.

For a composition in which every isocyanate group that is present in the composition resides on a monomeric polyisocyanate, "excess monomeric polyisocyanate" is the amount of monomeric polyisocyanate that would be present after the adhesive composition cures, assuming that every active hydrogen reacts with an isocyanate group.

For a composition that contains both non-monomeric polyisocyanate and monomeric polyisocyanate and in which every isocyanate group that is present in the composition resides on a monomeric polyisocyanate or on a non-monomeric polyisocyanate, "excess monomeric polyisocyanate" is the amount of monomeric polyisocyanate that would be present after the composition cures, assuming that every active hydrogen reacts with an isocyanate group, and assuming that the isocyanate groups that are attached to non-monomeric polyisocyanates react with active hydrogens before the isocyanate groups attached to monomeric polyisocyanate molecules react with active hydrogens. The preferred amount of excess monomeric polyisocyanate in the adhesive composition of the present invention is greater than zero and is 5% or less by weight based on the weight of the adhesive composition. Preferred adhesive compositions also contain one or more non-monomeric polyisocyanate.

Preferred monomeric polyisocyanates are aromatic polyisocyanates. Preferred monomeric polyisocyanates have molecular weight of 200 to 600. Preferred monomeric polyisocyanates include 2, 4' diphenylmethane diisocyanate, 4, 4' diphenylmethane diisocyanate, 2, 2' diphenylmethane diisocyanate, and mixtures thereof.

Preferred adhesive compositions have little or no non-aromatic monomeric polyisocyanates. More preferred adhesive compositions have no non-aromatic monomeric polyisocyanates. More preferred adhesive compositions have no monomeric polyisocyanate other than 2, 4' diphenylmethane diisocyanate, 4, 4' diphenylmethane diisocyanate, 2, 2' diphenylmethane diisocyanate, or mixtures thereof.

Preferred non-monomeric polyisocyanates are prepolymers. Preferred polyisocyanates for use in making prepolymers are the same monomeric polyisocyanates described hereinabove as preferred for inclusion in the adhesive composition in monomeric form. Preferred prepolymers are reaction products of one or more polyisocyanate with one or more polyol. Preferred polyols for use in making prepolymers are polyether polyols, polyester polyols, and mixtures thereof; more preferred is a mixture of one or more polyether polyol with one or more polyester polyol. Preferred polyols for use in making a prepolymer include a mixture one or more triol with one or more diol. In preferred embodiments, the polyols used in making the prepolymer contain, by weight based on the weight of all triols used in making the prepolymer, 5% or more; more preferred is 10% or more. In preferred embodiments, the polyols used in making the prepolymer contain, by weight based on the weight of all triols used in making the prepolymer, 50% or less; more preferred is 30% or less. In preferred embodiments, the only compounds with active hydrogens that are used in making the prepolymer are polyols.

It is useful to characterize the amount of polyisocyanate in the adhesive composition. That amount is the sum of the weights of all polyisocyanate compounds divided by the total weight of the adhesive composition, expressed as a percentage. The preferred amount of polyisocyanate in the adhesive composition of the present invention is 20% or more by weight based on the weight of the adhesive composition. The more preferred amount of polyisocyanate in the adhesive composition of the present invention is, by weight based on the weight of the adhesive composition, 25% or more; more preferred is 30% or more. Also, the preferred amount of polyisocyanate in the adhesive composition of the present invention is 90% or less by weight based on the weight of the adhesive composition; the more preferred amount of polyisocyanate in the adhesive composition of the present invention is, by weight based on the weight of the adhesive composition, 80% or less.

A different way to characterize the curable adhesive composition is the percent of isocyanate reactive functional groups, called "%NCO." This number is the sum of the weights of all isocyanate functional groups divided by the total weight of the adhesive composition, expressed as a percentage. A further useful characterization of the curable adhesive composition is the isocyanate index, which is the quotient of the total number of moles of isocyanate groups divided by the total number of moles of active-hydrogen groups. In preferred embodiments, the isocyanate index is larger than 1.

The adhesive composition of the present invention contains one or more compound having plural active hydrogens. Preferred adhesive compositions contain one or more polyols. Preferred adhesive compositions contain one or more polyether polyols or contain a mixture of one or more polyether polyols with one or more alkyl polyols. Preferred adhesive compositions contain one or more triol. In more preferred adhesive compositions, the polyol or mixture of polyols that is present in the adhesive composition contain, by weight based on the weight of all polyols present in adhesive composition, triol in the amount of 30% to 100%; more preferably 50% to 100%. Preferred adhesive compositions contain little or no compound having plural active hydrogens other than polyols.

The adhesive composition of the present invention contains one or more plasticizer. Preferred plasticizers have 8 or more aliphatic carbon atoms. More preferred plasticizers have 10 or more aliphatic carbon atoms; more preferred plasticizers have 16 or more aliphatic carbon atoms. Preferred plasticizers have one or more chemical group that contains only carbon and hydrogen atoms and that contains 4 or more aliphatic carbon atoms. More preferred plasticizers have two or more chemical groups that each contain 8 or more aliphatic carbon atoms.

The preferred amount of plasticizer is 0.5% or more by weight based on the weight of the adhesive composition. More preferred, by weight based on the weight of the adhesive composition, is 1% or more; more preferred is 3% or more. The preferred amount of plasticizer is 15% or less by weight based on the weight of the adhesive composition. More preferred is, by weight based on the weight of the adhesive composition, 10% or less; more preferred is 7% or less; more preferred is 5% or less.

The plasticizer is soluble in the adhesive composition of the present invention. That is, in each embodiment of the present invention, when the adhesive composition of the present invention is at 25°C, the plasticizer that is present is dissolved in the adhesive composition. The plasticizer that is present is also soluble in the adhesive composition at 40°C.

Preferably, the plasticizer causes a reduction in viscosity of the adhesive composition of the present invention at 40°C. That is, the viscosity of the adhesive composition at 40°C ("V1") may be compared to the viscosity of a particular comparison composition ("V0"). The comparison composition is the same as the adhesive composition, with all ingredients in the same proportions to each other, except that the plasticizer is not present. The quotient of V1 divided by V0 is preferably0.9 or less; more preferably 0.8 or less. Viscosity is measured using a Brookfield viscometer, Model DV-II, using spindle #27, at 20 rpm.

A catalyst such as, for example, a tertiary amine or a tin-based catalyst or a mixture thereof is optionally admixed with the ingredients of the adhesive composition. In preferred embodiments, little or no catalyst is present. In more preferred embodiments, no catalyst is present.

The composition of the present invention is preferably solventless. Preferred compositions of the present invention contain solvent in the amount, by weight based on the weight of the composition, of 3% or less; more preferably 1% or less; more preferably 0.3% or less. The total solids of the composition of the present invention is preferably 95% or higher; more preferably 97% or higher; more preferably 99% or higher; more preferably 99.7% or higher.

The adhesive composition may be formulated by admixing additional conventional ingredients such as fillers, pigments, tackifiers, plasticizers, rheology modifiers, polymers (including, for example, thermoplastic resins other than those discussed herein above), dehydrating agents (including, for example, silanes), benzoyl chloride, other polyols (including, for example, fatty polyols), ultraviolet indicators, etc. If such additional conventional ingredients are used, they are chosen and used with due regard to the reactivity of the the isocyanate groups, which is desirably maintained. If such additional conventional ingredients are used, they may be added, individually or in any combination, to the composition before the other ingredients, after the other ingredients, or during any stage or combination of stages of the formation of the adhesive composition.

In preferred embodiments, the adhesive composition of the present invention contains little or no compound that has one or more reactive group selected from epoxide groups, acrylic groups, methacrylic groups, and carboxylic anhydride groups. More preferred are embodiments in which the adhesive composition of the present invention contains no compound that has one or more reactive group selected from epoxide groups, acrylic groups, methacrylic groups, and carboxylic anhydride groups.

In embodiments that involve application of the curable adhesive composition of the present invention to at least one substrate, the application is preferably effected by conventional means such as, for example, spray applicator, bead applicator, nozzle, doctor blade, extrusion, or roll coater, to form a continuous or discontinuous film of adhesive, as desired.

The composition of the present invention is preferably applied at a level, in grams per square meter, of 0.5 or greater; more preferably 1 or greater. The composition is preferably applied at a level, in grams per square meter, of 5 or less; more preferably 3 or less.

In some embodiments, the curable adhesive composition of the present invention is used as an adhesive to bond a first substrate to at least one subsequent substrate. In such embodiments, the adhesive composition is applied to a first substrate, and, subsequently or simultaneously, the applied adhesive composition is contacted by at least one subsequent substrate to provide a bonded structure.

In some of the embodiments in which the curable adhesive composition of the present invention is used as an adhesive to bond a first substrate to at least one subsequent substrate, the structure so formed is optionally subjected to applied pressure such as by passing the structure between rollers to effect increased contact of the substrates with the curable adhesive composition. If such pressure is applied, it may be applied for a relatively short duration or for a relatively long duration; and it may be constant, increasing, decreasing, or a combination thereof. If the structure is at temperature above room temperature, it is then cooled or allowed to cool. If pressure is applied, cooling may take place during application of the pressure, after application of the pressure, or a combination thereof.

In preferred embodiments of the present invention, the adhesive composition of the present invention contains little or no solid polymer that is not soluble in the liquid portion of the adhesive composition of the present invention. More preferred are adhesive compositions that contain no such polymer.

In preferred embodiments of the present invention, the adhesive composition of the present invention contains little or no solid material of any composition that is not soluble in the liquid portion of the adhesive composition of the present invention. More preferred are adhesive compositions that contain no such solid material.

In preferred embodiments, the adhesive composition of the present invention contains little or no acrylic polymer. An acrylic polymer is a polymer in which 25% or more of the polymerized monomer units, by weight based on the weight of the polymer, are selected from acrylic or methacrylic acid, substituted and unsubstituted esters thereof, and substituted and unsubstituted amides thereof. More preferred are embodiments in which the adhesive composition of the present invention contains no acrylic polymer.

In preferred embodiments, the adhesive composition of the present invention contains little or no polymer that is not a polyurethane. More preferred are embodiments in which the adhesive composition of the present invention contains no polymer that is not a polyurethane.

In preferred embodiments, the adhesive composition of the present invention contains little or no compound that has a reactive group other than isocyanate, hydroxyl, and amine. More preferred are adhesive compositions that contain no compound that has a reactive group other than isocyanate, hydroxyl, and amine. Still more preferred are adhesive compositions that contain no compound that has a reactive group other than isocyanate and hydroxyl.

In preferred embodiments of the present invention, the curable adhesive composition of the present invention is applied to, or otherwise contacted to, one or more substrates. Some suitable substrates include, for example, wood, metal, plastics, composite materials, fabric (including woven and non-woven), paper, and combinations thereof. Suitable substrates include, for example, natural wood, plywood, lauan wood, particle board, oriented strand board, rigid plastic, flexible plastic, plastic films, plastic foams, and combinations thereof. If more than one substrate is used, any combination of suitable substrates is also suitable. In some embodiments, all the substrates will be made of the same material; in other embodiments, two or more different materials will be used as substrates.

In preferred embodiments, one or more substrates is a polymer film. More preferred are embodiments in which the curable adhesive composition is used to bond together two polymer films.

In preferred embodiments, one or more substrates is a polymer film. More preferred are embodiments in which the curable adhesive composition is used to bond together two polymer films. Preferred polymer films contain organic polymer. Preferred organic polymers are polyesters, polyolefins (including copolymers of olefins with other monomers), polyamides, and blends thereof. More preferred organic polymers are polyethylene terephthalate, polyethylene, polypropylene, and nylon.

It is useful to consider embodiments herein called "ordinary cure" embodiments. In ordinary cure embodiments, two polymer films are bonded together to form a laminate, using a curable adhesive composition of the present invention. The curing reaction is allowed to progress to a point in time (herein "T1") at which the adhesive properties are acceptable and at which the adhesive properties do not change appreciably over time. During a process of ordinary cure, it is useful to assess the PAA level as a function of time. Usually, after T1 is reached, the PAA level decreases over time as the laminate is stored. It is desirable that the level of PAA becomes acceptably low in as short a time as possible.

Some types of films allow diffusion of water more readily than other types of films. For some choices of film types, a laminate (prior to the present invention) might have taken 14 days or more, or even 20 days of storage after formation of the laminate before the PAA level was acceptably low. It is contemplated that laminates made with the adhesive composition of the present invention will achieve acceptably low PAA levels in shorter times than comparable previously-known adhesives.

A laminate that is made of two films may be made of two films that are identical to each other or may be made of two films that are different from each other.

A desirable characteristic of curable adhesive compositions is bond strength development. When the moisture-reactive composition is used to bond two substrates together, bond strength development is assessed by measuring the bond strength prior to completion of the curing reaction. In particular, bond strength development is assessed by measuring the bond strength at 2 to 8 hours after formation of the bonded assembly.

It is to be understood that for purposes of the present examples that each operation disclosed herein is performed at 25°C unless otherwise specified. "Ambient conditions" are approximately 22°C.

The following are examples of the invention.

The following abbreviations were used.

| **Term:** | **Definition** | | **Term:** | **Definition** |
|---|---|---|---|---|
| Abbr. | Abbreviation | | Ingr. | Ingredient |
| MDI | methylene diisocyanate | | Sub1 | Primary Substrate |
| DEG | diethylene glycol | | Sub2 | Secondary Substrate |
| OHew | OH equivalent weight | | pbw | parts by weight |

The following ingredients were used.

| **Code** | **Description** |
|---|---|
| I-1 | Mixture of 2,4' and 4,4' MDI |
| I-2 | 4,4' MDI with small amount of 2,4' MDI |
| I-3 | Mixture of 2,4', 2,2', and 4,4' MDI with reduced level of 2,2' MDI isomer. |
| S-1 | DEG Adipate polyester diol with OHew 400 to 535 range. |
| H-1 | Adipate polyester polyol, based on mixed glycols, OHew 860 to 1125 range |
| H-2 | polypropylene glycol, OHew 200 to 225 range |
| H-3 | polyether triol with OHew 220 to 250 range |
| H-4 | polyether triol with OHew 1400 to 1900 range |
| H-5 | polyether triol with OHew 140 to 155 range |
| H-6 | adhesion promoter |
| H-7 | polyether triol with OHew 82 to 88 range |
| P-1 | epoxidized soybean oil |
| P-2 | acetyl tri-n-butyl citrate |
| P-3 | di-isononyl ester of 1,2 cyclohexane dicarboxylic acid |
| P-4 | 2,2'-dimethyl-3-methylene-bicyclo[2.2.1]heptane |
| P-5 | soy oil |
| OPA | 85% solution of orthophosphoric acid in water |
| TMP | trimethylol propane |

The following substrates were used.

| **Code** | **Description** |
|---|---|
| Foil | prelaminated aluminum foil |
| PET | polyester film, thickness 12 micrometers |
| PE | PE film with thickness of 80 micrometers |
| Nylon | Nylon film with thickness of 15 micrometers |
| PE-E | Ethylene vinyl acetate modified PE film with thickness of 50 micrometers |

The adhesive compositions were prepared as follows.

Preparation of prepolymer (isocyanate component): All of polyol and plasticizer were loaded into the reactor under nitrogen blanket. Then all the isocyanate was loaded. Contents were heated under nitrogen blanket to 60°C to 65°C. Once the exotherm subsided, then the contents were heated to 80°C to 85°C for 2.5 hours under nitrogen blanket, until the desired isocyanate level was achieved. The contents were then cooled to 55°C to 60°C and packed under nitrogen blanket.

Preparation of polyol component: All the components were loaded under nitrogen blanket and mixed for 30 minutes under at 20°C to 25°C. If TMP was used in the polyol component, then the contents were heated to 80°C to 85°C and mixed at 80°C to 85°C for about an hour and then cooled to 55°C to 60°C and packed under nitrogen blanket.Preparation of adhesive: The isocyanate component (ambient condition) and polyol component (ambient condition) were weighed accurately into a container at the weight ratio shown below and then hand mixed using spatula till mixed adhesive was completely homogeneous. (one to two minutes). This pre-mixed adhesive (at ambient temperature) was then fed on Polytype™ roll coater (metered rolls set at 40°C to 45°C). Mixed adhesive was then applied to in line corona treated primary web at the coverage of 1.6 to 2 grams per square meter or 1 to 1.2 lbs. per ream, and then adhesive coated primary web was mated to secondary web and then this laminated film was nipped and wound on the finish roll on Polytype™ laminator.

Preparation of laminate for bond data using "US protocol": After appropriate curing time, 2.54 cm (one inch) wide strip was cut from the finished roll and bond data was generated on Instron™ tensile tester using separation speed of 25.4 cm/minute (10 inches/minute). Results are reported as grams of force required to peel the laminate apart (abbreviated as "f(g)"). Failure modes are reported as follows:
Sub = substrate failure
Coh = cohesive failure; adhesive composition remains on both substrates
At = adhesive transfer

Preparation of laminate for bond data using "ER protocol": After appropriate curing time, 15 mm. wide strip is cut from the finished roll and bond data is generated on Instron™ using separation speed of 101.6 mm/min (4 inch per minute).Bond data reported is the average of two specimens tested under appropriate condition. The force required to separate the substrates (i.e., the result of the bond data test) at 3 to 8 hours is considered to be an assessment of the "bond strength development" of the laminate.

The following Test procedures were used.

Viscosity is measured with Brookfield model DV-II viscometer.

"Visc-A" is the viscosity of "Part A" prepolymer formulation, 25°C, spindle #27, 20 rpm, reported in mPa*s (cps). Visc-AB" is the viscosity at 40°C of the mixture of Part A with Part B, immediately after making the mixture 40°C, measured with the same viscometer, spindle, and rotation speed as used for Visc-A .

"%Mon-A" estimates the weight percent of monomeric polyisocyanate in Part-A, based on the weight of the Part-A formulation. This value is calculated from the ingredients and amounts that are reacted to form Part-A, assuming that every hydroxyl group forms a urethane link with an isocyanate group, and assuming that all hydroxyl groups are completely reacted with polyisocyanate.

"%Mon-AB" characterizes the weight percent of monomeric polyisocyanate in the mixture of Part-A with Part-B, based on the weight of the mixture of Part-A with Part B. This value is calculated from the ingredients and amounts that are used in making the mixture of Part-A with Part-B. This value estimates the amount of monomeric polyisocyanate that would be present after Part-A reacted with Part-B, assuming that every hydroxyl group forms a urethane link with an isocyanate group, and assuming that the isocyanate groups that are attached to prepolymer molecules react with hydroxyl groups prior to the isocyanate groups attached to monomeric polyisocyanate molecules.

PAA level was measured as follows. Laminates were prepared as described above. Primary substrate was nylon, and the secondary substrate was PE-E. After cure on the laboratory bench at approximately 23°C and 50% relative humidity for 7 days, PAA was measured. Laminates were exposed to simulant (3% acetic acid in water by weight) for 2 hours at 70°C. PAAs in the simulant were derivatized by diazotization so that the concentration of PAAs could be determined colorimetrically. The concentration of PAAs is reported as aniline hydrochloride equivalents, as micrograms of aniline hydrochloride per 100 ml of simulant. The procedure was as follows. All solutions are aqueous. 100 ml of simulant was mixed with 12.5 ml of hydrochloric acid solution (1N) and 2.5 ml of sodium nitrite solution (0.5 g per 100 ml of solution) and was allowed to react for 10 minutes. 5 ml of ammonium sulfamate (2.5 g per 100 ml of solution) was added and allowed to react for 10 minutes. 5 ml of coupling reagent (1 g of N-(1-naphtyl)-ethylenediamine dihydrochloride per 100 g of solution) was added and allowed to react for 120 minutes. The solution was concentrated by elution through an ODS solid phase extraction column, and the extinction coefficient was measured at 550 nm. To determine the concentration of PAA, the extinction coefficient was compared with the extinction coefficients of blank samples and a variety of samples with known concentration of aniline hydrochloride.

Example 1: Polyisocyanate Prepolymer formulations (Part A)

| | Formulation Number (amounts in parts by weight) | | | | | | | | |
|---|---|---|---|---|---|---|---|---|---|
| | **A1** | **A2** | **A3** | **A4** | **A5** | **A6** | **A7** | **A8** | **A9** |
| **Ingr.** | ------- | ------ | ------- | ------- | ------- | ------- | ------- | ------- | ------- |
| I-1 | 28.8 | | | | | | 30.9 | 28.8 | |
| I-2 | 18.4 | 18.4 | 18.4 | 18.4 | 18.4 | 18.4 | 20.7 | 18.4 | 20.7 |
| I-3 | | 28.8 | 28.8 | 28.8 | 28.8 | 28.8 | | | 30.9 |
| S-1 | 3.46 | 3.69 | 3.69 | 3.69 | 3.69 | 3.69 | 3.46 | 3.69 | 3.46 |
| H-1 | 10.1 | 10.1 | 10.1 | 10.1 | 10.1 | 10.1 | 10.1 | 10.1 | 10.1 |
| H-2 | 11.1 | 11.1 | 11.1 | 11.1 | 11.1 | 11.1 | 11.1 | 11.1 | 11.1 |
| H-3 | 2.07 | 1.84 | 1.84 | 1.84 | 1.84 | 1.84 | 1.84 | 1.84 | 1.84 |
| H-4 | 21.9 | 21.9 | 21.9 | 21.9 | 21.9 | 21.9 | 21.9 | 21.9 | 21.9 |
| P-1 | | | | 4.2 | | | | | |
| P-2 | | | 4.2 | | | | | | |
| P-3 | 4.2 | 4.2 | | | | | | 4.2 | |
| P-4 | | | | | 4.2 | | | | |
| P-5 | | | | | | 4.2 | | | |
| | | | | | | | | | |
| %NCO | 12.0 | 12.1 | 12.1 | 12.1 | 12.1 | 12.1 | 13.5 | 12.1 | 13.5 |
| Visc-A | 7775 | 7250 | 7350 | 9480 | 6450 | 7150 | 7175 | 7250 | 7100 |
| %Mon-A | 24.4 | 24.6 | 24.6 | 24.6 | 24.6 | 24.6 | 29.1 | 24.6 | 29.1 |

Example 2: Polyol formulations (Part B)

| | Formulation Number (amounts in parts by weight) | | | | |
|---|---|---|---|---|---|
| | **B1** | **B2** | **B3** | **B4** | **B5** |
| **Ingr.** | --------- | -------- | --------- | --------- | --------- |
| H-5 | 99 | 66.7 | 72.6 | 72.5 | 66.7 |
| H-3 | | 21.5 | 23.4 | 23.3 | 21.5 |
| H-7 | | 11.6 | | | 11.6 |
| OPA | | 0.2 | | 0.2 | 0.2 |
| H-6 | 1 | | | | |
| TMP | | | 4.0 | 4.0 | |
| | | | | | |
| | | | | | |
| OH wt⁽³⁾ | 146 | 146 | 163 | 163 | 146 |

| | | | | | |
|---|---|---|---|---|---|
| (3) Hydroxyl Equivalent Weight | | | | | |

Example 3: Adhesive Compositions

For each adhesive composition, a Part-A formulation was mixed with a Part-B formulation in the weight ratio shown below. Viscosities and PAA were measured as described above. Adhesives number 6C, 7C, and 8C are comparative adhesives.

| | **Adhesive Number** | | | | |
|---|---|---|---|---|---|
| | **1** | **2** | **3** | **4** | **5** |
| | ------- | ------- | ------- | ------- | ------- |
| Part-A | A8 | A2 | A3 | A5 | A6 |
| Part-B | B2 | B2 | B2 | B2 | B2 |
| ratio⁽⁴⁾ | 100/35 | 100/35 | 100/35 | 100/35 | 100/35 |
| | | | | | |
| Visc-AB | 1325 | 1325 | 1412 | 1288 | 1412 |
| %Mon-AB | 3.02 | 3.02 | 3.02 | 3.02 | 3.02 |
| PAA | 1.18 | 0.36 | 0.45 | 0.82 | 0.35 |

| | **6C** | **7C** | **8C** | **9** | **10C** |
|---|---|---|---|---|---|
| | ------- | ------- | ------- | ------- | |
| Part-A | A7 | A7 | A7 | A1 | A9 |
| Part-B | B2 | B3 | B4 | B1 | B5 |
| ratio⁽⁴⁾ | 100/39 | 100/40 | 100/40 | 100/36 | 100/40 |
| | | | | | |
| Visc-AB | 1238 | 1250 | 1250 | 1325 | 1275 |
| %Mon-AB | 3.58 | 4.95 | 4.94 | 2.56 | 3.11 |
| PAA | 2.09 | 2.9 | 2.5 | 1.35 | 1.2 |

| | | | | | |
|---|---|---|---|---|---|
| (4): weight ratio of Part-A to Part-B (4): weight ratio of Part-A to Part-B | | | | | |

Adhesives using I-1 are compared as follows. Adhesives Number 1 and Number 9 (Examples with plasticizer) had much lower PAA level than Comparative Adhesives Number 6C, 7C, and 8C (without plasticizer).

Adhesives using a blend of I-2 and I-3 are compared as follows. Adhesives Number 2, Number 3, Number 4, and Number 5 (Examples with plasticizer) had much lower PAA level than Comparative Adhesive Number 10C (without plasticizer).

Example 4: Results of Adhesion Tests on Laminates Using Adhesive Number 2.

Laminates were made and tested, using Adhesive Number 2 as described above. Results shown were measured at the time intervals shown after the laminate was made and then stored at approximately 23°C. Units are grams of force to peel the sample that was 2.54 cm (1 inch) in width.

| | | | Peel Force at Various Time Intervals | | | | |
|---|---|---|---|---|---|---|---|
| Sub1 | Sub2 | | 3 hrs | 8 hrs | 24 hrs | 7 days | 14 days |
| foil | PE (50 micrometers) | f(g) | 61 | 554 | 1234 | 731 | 638 |
| | | mode | Coh | Coh | Sub | At | At |
| PET | PE | f(g) | 207 | 1102 | 2771 | 2546 | 2712 |
| | | mode | Coh | Sub | Sub | Sub | Sub |

Both laminates showed good bond strength development.

Example 5: Results of Adhesion Tests on Laminates Using Adhesive Number 5.

Laminates were made and tested, using Adhesive Number 5 as described above. Results shown were measured at the time intervals shown after the laminate was made and then stored at approximately 23°C. Units are grams of force to peel the sample that was 2.54 cm (1 inch) in width.

| | | | Peel Force at Various Time Intervals | | | | |
|---|---|---|---|---|---|---|---|
| Sub1 | Sub2 | | 3 hrs | 8 hrs | 24 hrs | 7 days | 14 days |
| foil | PE (50 micrometers) | f(g) | 228 | 583 | 590 | 551 | 628 |
| | | mode | Coh | Coh | At | At | At |
| PET | PE | f(g) | 312 | 1193 | 1824 | 1077 | 1560 |
| | | mode | Coh | Sub | Sub | Sub | Sub |

Both laminates showed good bond strength development.

Example 6: Results of Adhesion Tests on Laminates Using Adhesive Number 4.

Laminates were made and tested, using Adhesive Number 4 as described above. Results shown were measured at the time intervals shown after the laminate was made and then stored at approximately 23°C. Units are grams of force to peel the sample that was 2.54 cm (1 inch) in width. Both laminates showed good bond strength development.

| | | | Peel Force at Various Time Intervals | | | | |
|---|---|---|---|---|---|---|---|
| Sub1 | Sub2 | | 3 hrs | 8 hrs | 24 hrs | 7 days | 14 days |
| foil | PE (50 micrometers) | f(g) | 47 | 603 | 1786 | 756 | 729 |
| | | mode | Coh | Coh | Sub | At | At |
| PET | PE | f(g) | 141 | 914 | 1329 | 2108 | 1810 |
| | | mode | Coh | Sub | Sub | Sub | Sub |

Example 7: Results of Adhesion Tests on Laminates Using Adhesive Number 3

Laminates were made and tested, using Adhesive Number 3 as described above. Results shown were measured at the time intervals shown after the laminate was made and then stored at approximately 23°C. Units are grams of force to peel the sample that was 2.54 cm (1 inch) in width.

| | | | Peel Force at Various Time Intervals | | | | |
|---|---|---|---|---|---|---|---|
| Sub1 | Sub2 | | 3 hrs | 8 hrs | 24 hrs | 7 days | 14 dyvs |
| foil | PE (50 micrometers) | f(g) | 72 | 551 | 862 | 910 | 768 |
| | | mode | Coh | Coh | At | At | At |
| PET | PE | f(g) | 257 | 822 | 2836 | 2701 | 2488 |
| | | mode | Coh | Sub | Sub | Sub | Sub |

Both laminates showed good bond strength development.

## Claims

1. An adhesive composition comprising
(a) one or more polyisocyanate,
(b) one or more polyol, and
(c) one or more plasticizer,
wherein the amount of excess monomeric polyisocyanate is 5% or less by weight based on the weight of said composition.

2. The adhesive composition of claim 1, wherein the amount of said plasticizer is 1% to 5% by weight based on the weight of said adhesive composition.

3. The adhesive composition of claim 1, wherein said plasticizer contains one or more chemical group that contains only carbon and hydrogen atoms and that contains 4 or more aliphatic carbon atoms.

4. The adhesive composition of claim 1, wherein said plasticizer contains two or more chemical groups that each contain 8 or more aliphatic carbon atoms.

5. The adhesive composition of claim 1, wherein said polyisocyanate comprises one or more aromatic polyisocyanate.

6. The adhesive composition of claim 1, wherein the total amount of non-aromatic polyisocyanates in said adhesive composition is either zero or is from 0% to 0.1% by weight based on the total weight of all polyisocyanates.

7. A process for making a laminate, said process comprising applying a layer of the adhesive composition of claim 1 to a polymer film, contacting said layer with a second polymer film, and then curing said adhesive composition or allowing said adhesive composition to cure.

8. A laminate made by a process comprising applying a layer of the adhesive composition of claim 1 to a polymer film, contacting said layer with a second polymer film, and then curing said adhesive composition or allowing said adhesive composition to cure.
